# EUROPEAN PATENT SPECIFICATION

(11) **EP 3 862 301 B1**
(45) Date of publication and mention of the grant of the patent: **16.11.2022**
(21) Application number: 21154062.0
(22) Date of filing: 28.01.2021
(51) Int. Cl.: B65G 47/08, B65B 35/44

(54) **RETAINER FOR A PACKAGE HANDLING ARRANGEMENT**
HALTER FÜR EINE VERPACKUNGSHANDHABUNGSANORDNUNG
DISPOSITIF DE RETENUE POUR UN AGENCEMENT DE MANIPULATION D'EMBALLAGES

(30) Priority: 04.02.2020 EP 20155434
(43) Date of publication of application: 11.08.2021
(73) Proprietor: Tetra Laval Holdings & Finance S.A., 1009 Pully (CH)
(72) Inventor: PERMERUP, Thomas, 242 93 Hörby (SE); BÖTTCHER, Filip, 24494 Furulund (SE); NYSTRÖM, Rasmus, 212 24 Malmö (SE)
(74) Representative: Tetra Pak - Patent Attorneys SE

(56) References cited:
- EP-A1- 0 693 445
- EP-A1- 3 106 397
- US-A- 3 833 110

## Description

### Technical Field

The invention relates to a device and method for grouping packages filled with a liquid food product.

### Technical Background

A processing system for producing packages filled with liquid food product typically includes a filling machine for forming the packages and filling the packages with the liquid food product, and a package handling arrangement or machine that receives the packages filled with the liquid food product from the filling machine. The packages may be formed of paperboard or other packaging material that is suitable to contain a liquid food product. Liquid food products that fill the packages may include beverages such as dairy products, dairy alternatives, juices and nectars, water, tea based drinks, coffee based drinks, fruit based drinks, sports and energy drinks, and wine. Liquid food products including cheese, yogurt, fruit, soups, sauces, dressings, and tomato preparations may also be suitable.

The package handling machine may include a package divider that channels packages into lanes as they enter the machine, a holding device or grouping arrangement that groups the packages, and a film or shrink wrapper for shrink wrapping a predetermined number of packages to produce multipacks of packages. Many package handling machine includes a transportation belt that transports the packages in a downstream direction. When the grouping arrangement stops, a recoil or wave movement may occur in the packages standing on the transportation belt. Conventional package handling machines are deficient in that when the recoil occurs, a recoiled package may be hit from behind by another package and fall on the transportation belt. A fallen package may negatively impact downstream processing. Usually, the fallen package must be manually put in an upright position.

A package handling arrangement according to the preamble of claim 1 is known for example from EP 3 106 397 A1.

### Summary

It is an object of the invention to at least partly overcome one or more limitations of the prior art. In particular, it is an object to provide a device and method that accomplish efficiently grouping packages filled with a liquid food product.

According to an aspect of the invention, a package handling arrangement for grouping packages filled with liquid food product includes a transportation belt configured to transport the packages in a downstream direction, a guide member arranged on one side of the transportation belt, a grouping arrangement configured to receive the packages from the transportation belt and group a predetermined number of the packages together, and a retainer arranged on an opposite side of the transportation belt relative to the guide member. The retainer has a plurality of flexible elements angled relative to the transportation belt and each flexible element is configured to flex to enable passage of a package in the downstream direction, and retract from a flexed position after passage of the package, to prevent movement of the package in an upstream direction.

Accordingly, in contrast to conventional package handling machines which do not have any sort of package retaining device, the package handling arrangement described herein advantageously prevents packages from falling off the transportation belt during stoppage of the grouping arrangement. Each flexible element of the retainer is configured to flex to a flexed position and enable passage of a package during operation of the grouping arrangement. After passage of the package the flexible element may retract from the flexed position to a neutral position, as it may be formed of a resilient material. When in the neutral position, the flexible element may have a predetermined amount of stiffness to maintain its shape when subject to a recoil force by a package such that the flexible element prevents upstream movement of the package during stoppage of the grouping arrangement. The retainer may also be easily integrated into an existing package handling machine via attachment to a guide rail arranged along the transportation belt of the package handling machine.

According to another aspect of the invention, a method for grouping packages filled with a liquid food product includes transporting the packages in a downstream direction on a transportation belt, guiding the packages with a guide member arranged on one side of the transportation belt, and grouping a predetermined number of the packages together using a grouping arrangement configured to receive the packages from the transportation belt. Guiding the packages includes passing the packages past a retainer. The retainer is arranged on an opposite side of the transportation belt relative to the guide member and has a plurality of flexible elements angled relative to the transportation belt. Each flexible element is configured to flex to enable passage of a package in the downstream direction and retract from a flexed position after passage of the package, to prevent movement of the package in an upstream direction.

This method may include the same features as the package handling arrangement for grouping packages and shares the same advantages.

Still other objectives, features, aspects and advantages of the invention will appear from the following detailed description as well as from the drawings.

### Brief Description of the Drawings

Features of the invention will now be described, by way of example, with reference to the accompanying schematic drawings.
Fig. 1 is a perspective view of a package handling arrangement for grouping packages filled with a liquid food product.
Fig. 2 is another perspective view of the arrangement of Fig. 1.
Fig. 3 is a top view of the arrangement of Fig. 1.
Fig. 4 is a partial top view of the arrangement of Fig. 1 showing a retainer having flexible elements.
Fig. 5 is a perspective view of the arrangement of Fig. 4.
Fig. 6 is a partial top view of the arrangement of Fig. 4 showing a neutral position and a flexed position of the flexible elements.
Fig. 7 is a top view of the arrangement of Fig. 4 showing the packages during operation of the arrangement.
Fig. 8 is a schematic drawing of a processing system for producing packages filled with a liquid food product, including the arrangement of Fig. 1.
Fig. 9 is a flow chart of a method for grouping packages filled with a liquid food product using a package handling arrangement, such as the arrangement of Fig. 1.

### Detailed Description

Embodiments of the invention will now be described more fully hereinafter with reference to the accompanying drawings, in which some, but not all, embodiments of the invention are shown. The invention may be embodied in many different forms and should not be construed as limited to the embodiments set forth herein.

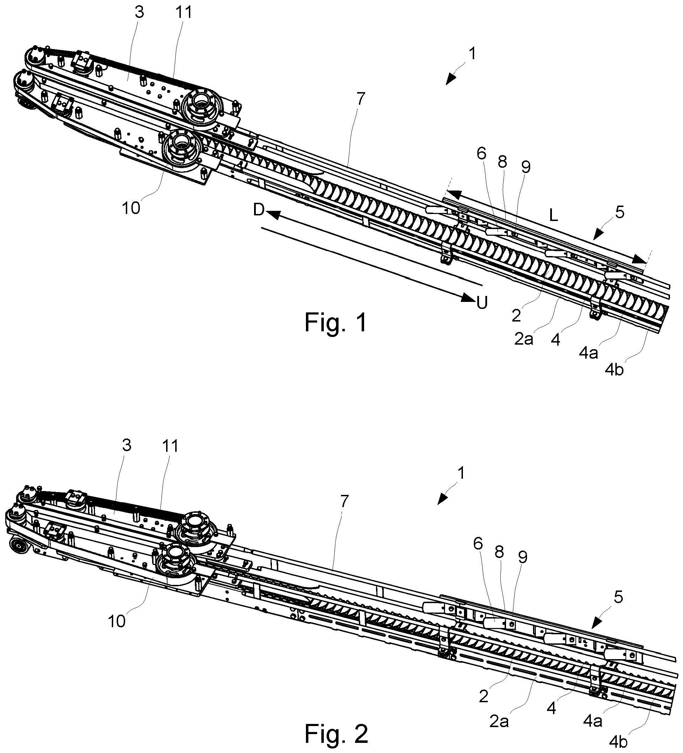

Referring first to Figs. 1-3, a package handling arrangement 1 for grouping packages filled with a liquid food product is shown. The package handling arrangement 1 includes a transportation belt 2 configured to transport the packages in a downstream direction D and a grouping arrangement 3 that is configured to receive the packages from the transportation belt 2 and group a predetermined number of the packages together. The packages may be formed of paperboard or other materials that are suitable for containing a liquid food product. The packages may have a rectangular or cylindrical shape, or have a rectangular shape with rounded corners. Other shapes may be suitable. The liquid food product may include dairy product such as cheese, yogurt, or milk products, dairy alternatives, juices and nectars, water, tea based drinks, coffee based drinks, fruit based drinks, sports and energy drinks, wine, fruit, soups, sauces, dressings, or tomato preparations. Other liquid food products may be suitable.

A guide member 4 is arranged on one side of the transportation belt 2 for guiding the packages along the transportation belt 2. The guide member 4 may be a guide rail or bar that is elongated and extends parallel to the transportation belt 2. Parallel bars 4a, 4b may form the guide member 4 and are mounted to a track 2a that supports the transportation belt 2. The transportation belt 2 may include any suitable conveyor type belt, chain, or other flexible member for transporting packages in a processing system. The guide member 4 is fixed to the track 2a and may extend along more than half of the entire length, or most of the entire length, of the transportation belt 2. The length of the guide member 4 may extend to the grouping arrangement 3 such that the guide member 4 guides the package until the package is captured by the grouping arrangement 3 at a downstream end of the transportation belt 2.

A retainer 5 is arranged on an opposite side of the transportation belt 2 relative to the guide member 4. The retainer 5 has a plurality of flexible elements 6 that are angled relative to the transportation belt 2 and the downstream direction D, to prevent movement of the packages in an upstream direction U that is opposite the downstream direction D. As the transportation belt 2 and the downstream direction D are parallel to each other, the flexible elements 6 are also angled relative to the downstream direction D. The retainer 5 may be removably attachable to a second guide member 7 that is arranged on the opposite side of the transportation belt 2 relative to the guide member 4. Similar to the guide member 4, the second guide member 7 may be a guide rail or bar that is elongated and extends parallel to the transportation belt 2. The second guide member 7 may also be fixed to the track 2a for the transportation belt 2. The flexible elements 6 may be secured to a bracket 8 via fasteners 9 and the bracket 8 may be mounted to the second guide member 7.

A length L of the retainer 5 may be less than an entire length of the second guide member 7 and the transportation belt 2 such that the retainer 5 extends along only a portion of the transportation belt 2. The arrangement of flexible elements 6 may terminate before the grouping arrangement 3 that is arranged downstream relative to the flexible elements 6. The grouping arrangement 3 may be in the form of a belt brake having two rotating belts 10, 11 that rotate toward the transportation belt 2 in opposite rotational directions relative to each other to capture a package from the transportation belt 2. The rotational axes about which the two rotating belts 10, 11 rotate extend in a direction that is normal to a plane in which the transportation belt 2 moves. The two rotating belts 10, 11 may be arranged to rotate in an upper plane that is parallel to the plane in which the transportation belt 2 moves to ensure that a package is engaged by the two rotating belts 10, 11.

A predetermined number of packages may be captured by the grouping arrangement 3 and grouped together for allowing subsequent wrapping. The grouping arrangement 3 may be configured to release the packages after the predetermined number of packages are grouped together. The packages are typically grouped in a single row and may thereafter, depending in what downstream equipment is used, be grouped in a pattern having more than one row and column. For example, between three and ten packages may be grouped together. Other packing patterns and numbers of packages may be suitable. The grouping arrangement 3 may be a conventional belt grouper.

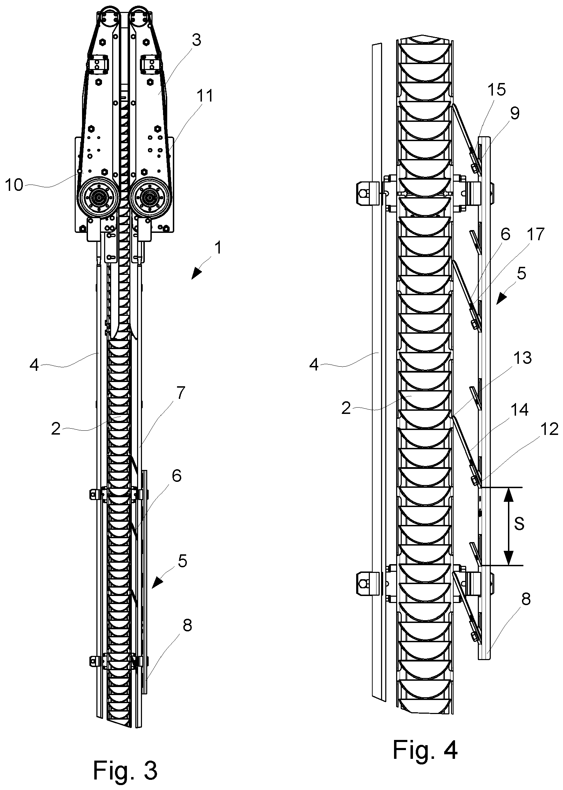

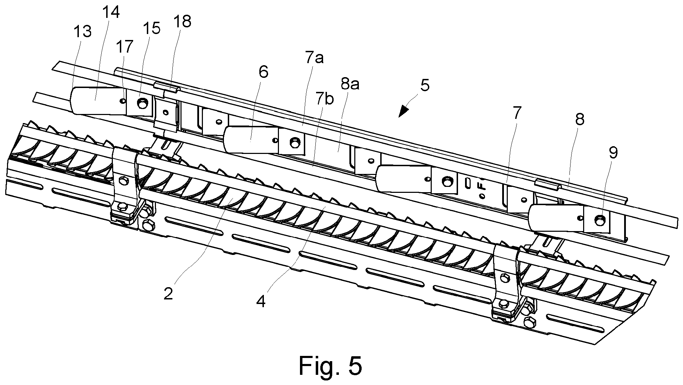

Figs. 4 and 5 show further details of the flexible elements 6 of the retainer 5. Each flexible element 6 has a base end 12, a tip end 13, and an elongated body 14 that extends from the base end 12 to the tip end 13. The base end 12 may be the portion of the flexible element 6 that is secured to the guide member 7. The base end 12 may be secured to the bracket 8 that is mounted to the guide member 7. The bracket 8 may be formed of a metal material and have pockets or mounting surfaces 15 that protrude from the bracket 8. The mounting surfaces 15 are configured to receive or engage against the base end 12 of a corresponding one of the flexible elements 6 for positioning the flexible element 6 relative to the bracket 8. The mounting surfaces 15 may be formed of metal and integrally formed as part of the bracket 8. The base end 12 may engage adjacent the mounting surface 15. The fasteners 9 may include screws, bolts, nuts, clamps, clasps, washers, or any other suitable fastening element. The flexible element 6 may include a fastener hole pattern 17 including a number of holes formed in the elongated body 14 that are configured to receive the fastener 9. Providing a number of possible fastener holes enables adjustment of the extending lengths of the flexible elements 6 to ensure that the flexible elements 6 are able to engage different sizes of packages.

As shown in Fig. 4, the flexible elements 6 may have a predetermined spacing S relative to each other along a portion of the second guide member 7. The predetermined spacing S may be set by the location of the mounting surfaces 15 along the bracket 8 such that the mounting surfaces 15 have the same predetermined spacing S. The flexible elements 6 may be evenly spaced and any number of flexible elements 6 may be provided. The predetermined spacing S may be between 15 and 25 centimeters, or even outside this range. The predetermined spacing S may be 20 centimeters. The bracket 8 may be formed to have the predetermined spacing S between the mounting surfaces 15 and each flexible element 6 may be arranged adjacent every other mounting surface 15 such that the spacing between the flexible elements 6 is twice the predetermined spacing S of the mounting surfaces 15. Forming the bracket 8 to have a smaller predetermined spacing S between the mounting surfaces 15 is advantageous in enabling different spacings between the flexible elements 6 when secured to the bracket 8 to accommodate for different sizes of packages.

The bracket 8 may include a hook or clamp 18 that engages the second guide member 7 for securing the bracket 8 to the second guide member 7. The clamp 18 and the second guide member 7 may have a snap fit connection. The clamp 18 may be attachable to parallel guide rails 7a, 7b that form the second guide member 7 such that the clamp 18 snaps around or extends over each of the parallel guide rails 7a, 7b. On an opposite side of the clamp 18 relative to the side that engages the second guide member 7, the clamp 18 is attached to a main support body 8a of the bracket 8. The main support body 8a may be planar in shape such that the mounting surfaces 15 are angled relative to the planar surface of the main support body 8a. When mounted to the second guide member 7, the main support body 8a is arranged outside the second guide member 7 relative to the transportation belt 2 and the packages that are transported between the first and second guide members 4, 7. The mounting surfaces 15 of the bracket 8 extend inwardly through the parallel guide rails 7a, 7b of the second guide member 7 toward the transportation belt 2.

Since the bracket 8 is, as seen relative the second guide member 7, mounted outside of the area in which the packages are moving, the bracket 8 may be easily mounted to a guide member in an existing package handling machine. Another advantage of the bracket 8 is that the predetermined spacing between the flexible elements 6 is provided by the mounting surfaces 15 formed in the bracket 8. Still another advantage of the bracket 8 is that all of the flexible elements may be uniformly mounted relative to the second guide member 7.

In one embodiment each flexible element 6 may be independently mounted to the second guide member 7 relative to the other flexible elements 6, such that a bracket may not be provided. Clamps or other suitable fastening mechanisms may be used to fix the base end 12 of each flexible element 6 to the guide member 7. Independently and separately mounting each flexible element 6 may be advantageous in enabling adjustment of spacing between the flexible elements 6. Still another advantage of independently and separately mounting each flexible element 6 is that maintenance or replacement of a single flexible element 6 may be less complex.

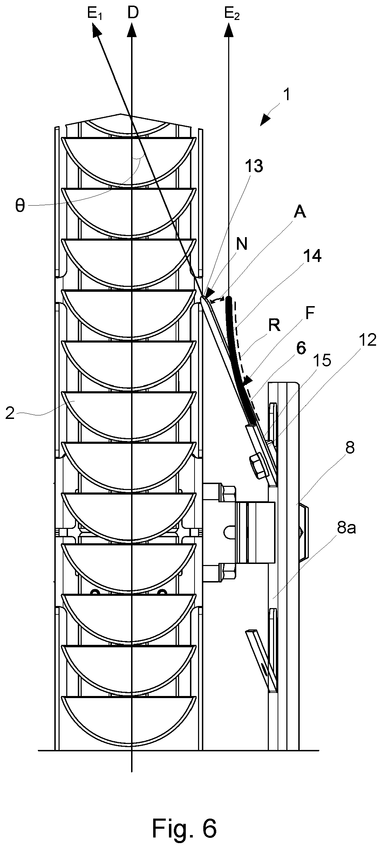

Fig. 6 shows the operation and different positions of the flexible elements 6. Each flexible element 6 is movable between a neutral position N and a flexed position F. During movement between the neutral position N and the flexed position F (schematically illustrated as a bent line), or flexing of the flexible element 6, the elongated body 14 of the flexible element 6 is deflected relative to the base end 12 such that the tip end 13 is also deflected. The deflection of the elongated body 14 and the tip end 13 may include the elongated body 14 being bent or curved relative to the base end 12. The deflection may also be referred to as flexing of the flexible element 6. During flexing of the flexible element 6, the base end 12 remains in a fixed position and the elongated body 14 and thus the tip end 13 are deflected relative to the base end 12. The base end 12 remains in a fixed position via the base end 12 being secured to the fixed mounting surface 15 of the bracket 8.

The flexible element 6 may be formed of a resilient and flexible plastic material. The flexible element 6 is also formed of a material having a predetermined stiffness that enables the flexible element 6 to maintain its shape when subject to a predetermined amount of force, such as a force exerted by a recoiling package, and enables the flexible element 6 to flex when subject to a greater amount of force, such as during normal movement of the package in the downstream direction. The flexible element 6 may have a length that is longer than the width and the thickness of the flexible element 6. The length of the flexible element 6 may be twice as long as the width and the length may be between 15 and 25 centimeters, or even outside this range. A thickness of the flexible element 6 may be less than three millimeters.

When the flexible element 6 is unflexed, i.e. no force is exerted against the flexible element 6, the flexible element 6 is in the neutral position N. When in the neutral position N, the flexible element 6 has minimal or no curvature and is elongated in a first extension direction E₁ that is transverse or obliquely angled relative to the downstream direction D and to the transportation belt 2. An angle θ between the first extension direction E₁, i.e. the transverse extension direction, and the downstream direction D may be between 15 and 30 degrees, or even outside this range. The angle θ may be approximately 22 degrees. Arranging the flexible element 6 in the obliquely angled orientation relative to the transportation belt 2 is advantageous in enabling the flexible element 6 to be more easily flexed and enable passage of a package moving in the downstream direction D. The flexible element 6 is more easily flexed by having a smaller angular displacement A as compared with a larger angular displacement that would be required if the flexible element was arranged directly perpendicular relative to the transportation belt 2.

The mounting surface 15 of the bracket 8 may also extend in the first extension direction E₁. When mounted to the guide member, the bracket 8 extends parallel to the transportation belt 2 and the downstream direction D such that the bracket 8 may be formed to have the mounting surface 15 angled relative to the main support body 8a by the same angle θ. The mounting surface 15 is fixed at the angle θ relative to the bracket 8 and may define the neutral position N for the flexible elements 6 when the flexible elements 6 are attached to the bracket 8.

The tip end 13 extends in the first extension direction E₁ when the flexible element 6 is in the neutral position N. During operation, a package moving in the downstream direction D on the transportation belt 2 engage the tip end 13. The package exerts a force in the downstream direction D on the tip end 13 and the tip end 13 is moved outwardly away from the transportation belt 2 to enable passage of the package past the flexible element 6. Movement of the tip end 13 is enabled by the elongated body 14 of the flexible element 6 flexing, e.g. bending or curving, relative to the base end 12 that is held by the mounting surface 15 of the bracket 8. The flexible element 6 is thus moved to the flexed position in which the tip end 13 extends in a second extension direction E₂ that is parallel to the side of the package. The second extension direction E₂ may be substantially parallel to the downstream direction D and the transportation belt 2. When in the flexed position F, the flexible element 6 has a curvature R. When the flexible element 6 is in the flexed position F, the mounting surface 15 will remain in the fixed position extending in the first extension direction E₁ to hold the base end 12 that will also remain in the fixed position extending in the first extension direction E₁.

When the package has past the flexible element 6, such that a rearmost surface of the package is downstream relative to the tip end 13 of the flexible element 6 and the package no longer engages or exerts a force against the tip end 13, the resiliency of the flexible element 6 enables the flexible element 6 to retract or return to the neutral position N such that the flexible element 6 will be unflexed and the tip end 13 will again extend in the first extension direction E₁ that is transverse relative to the downstream direction D.

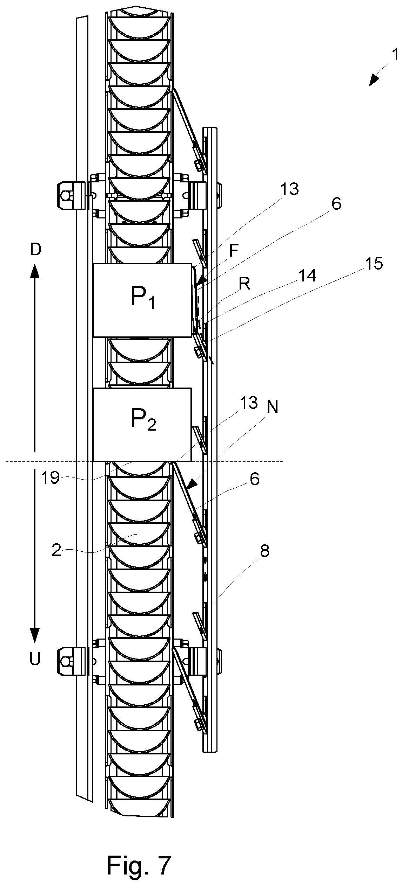

Fig. 7 shows the operation of the package handling arrangement 1 with packages P₁, P₂. The packages P₁, P₂ are transported by the transportation belt 2 in the downstream direction D. Package P₁ is in a position in which the package is passing the flexible element 6 that is in the flexed position F and has a curvature R. The force exerted by the moving package P₁ is sufficient to flex the flexible element 6. The angled orientation of the flexible element 6 toward the grouping arrangement and the package P₁ moving in the downstream direction D that is also toward the grouping arrangement 3 also enables the moving package P₁ to flex the flexible element 6. The tip end 13, or a tangent of the tip end 13, of the flexible element 6 extends parallel or nearly parallel with the side of the package P₁ that engages the tip end 13. The mounting surface 15 of the bracket 8 and the base end of the flexible element 6 remain in a fixed position in which the mounting surface 15 and the base end extend in the transverse extension direction E₁. Accordingly, the package P₁ is able to pass the flexible element 6 in the downstream direction D and move toward the grouping arrangement 3.

Package P₂ is in a position in which the package has moved past the flexible element 6 and is downstream relative to the flexible element 6. The flexible element 6 is in the neutral position N and the flexible element 6 is unflexed such that the tip end 13 extends in the transverse extension direction. When the grouping arrangement is stopped, a recoil effect may occur in the package queue, i.e. among packages standing on the transportation belt 2, such that a force in the upstream direction U is exerted against the package P₂. The package queue includes the plurality of packages P₁, P₂ that are aligned along the transportation belt 2 to be captured by the grouping arrangement 3. When in the neutral position N, the tip end 13 extending in the transverse extension direction may be engaged by a rear surface 19 of the package P₂ in the upstream direction U due to the recoil effect causing the package P₂ to have a slight movement in the upstream direction U. The stiffness of the flexible element 6 enables the flexible element 6 to withstand the slight force exerted by the package P₂ in the upstream direction U such that the flexible element 6 essentially maintains its shape and the elongated body 14 and the tip end 13 are not deflected very much relative to the base end 12. Thus, the package P₂ cannot move upstream past the flexible element 6 and is retained in the position downstream relative to the flexible element 6. Also, if the recoil effect occurs when a package is next to a flexible element, such package P₁, the force exerted on the package by the bent flexible element is typically large enough to prevent the package from falling.

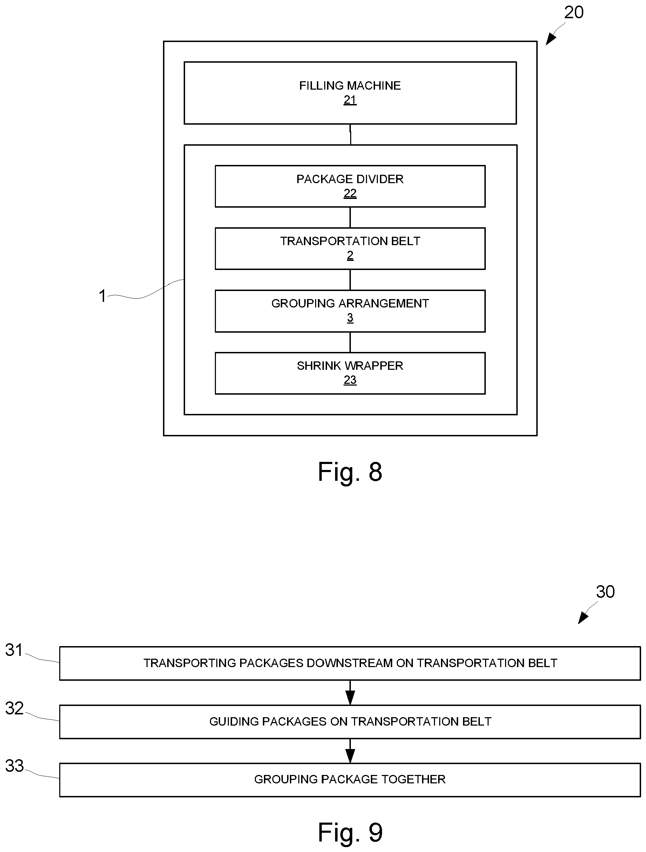

Fig. 8 shows a processing system 20 for producing packages filled with a liquid food product. The processing system 20 includes a conventional filling machine 21 that is configured to form packages and fill the packages with the liquid food product. The system 20 also includes the package handling arrangement 1 or machine that is configured to receive the packages from the filling machine 21. The package handling arrangement 1 includes the transportation belt 2 and the holding device or grouping arrangement 3. The package handling arrangement 1 may include additional modules, such as a package divider 22 that channels the packages into lanes as they enter the machine, and a film or shrink wrapper 23 for shrink wrapping the predetermined number of packages that are grouped by the grouping arrangement 3. The grouping arrangement 3 may be configured to release the packages after the predetermined number of packages are grouped together for wrapping by the shrink wrapper 23.

Referring now to Fig. 9, a method 30 for grouping packages filled with a liquid food product is shown. The arrangement 1 shown in Figs. 1-8 may be used to perform the method 30. The method 30 includes a step 31 of transporting packages P₁, P₂ in the downstream direction D on the transportation belt 2. A step 32 of the method 30 includes guiding the packages P₁, P₂ with the guide member 4 arranged one side of the transportation belt 2. A step 33 of the method 30 includes grouping a predetermined number of the packages P₁, P₂ together using the grouping arrangement 3 configured to receive the packages P₁, P₂ from the transportation belt 2. Step 32 may include passing the packages P₁, P₂ past the retainer 5 that is arranged on an opposite side of the transportation belt 2 relative to the guide member 4. As described, the retainer 5 has a plurality of flexible elements 6 that are angled relative to the transportation belt. Each flexible element 6 is configured to flex to enable passage of a package P₁, P₂ in the downstream direction D and retract to a neutral position N from a flexed position F after passage of the package P₁, P₂ to prevent movement of the package P₁, P₂ in an upstream direction U.

The package handling arrangement 1 for grouping packages filled with liquid food product including the retainer 5 is advantageous in providing more efficient grouping of packages by preventing packages from falling off the transportation belt. The retainer includes flexible elements that are angled relative to the transportation belt and the downstream direction such that the flexible elements are flexed to enable the packages to pass and move in the downstream direction during operation of the grouping arrangement, and resilient to retract into a position in which the stiffness of the flexible elements prevents backwards or upstream movement of the packages during stoppage of the grouping arrangement.

From the description above follows that, although various embodiments of the invention have been described and shown, the invention is not restricted thereto, but may also be embodied in other ways within the scope of the subject-matter defined in the following claims.

## Claims

1. A package handling arrangement (1) for grouping packages (P₁, P₂) filled with liquid food product, comprising:
a transportation belt (2) configured to transport the packages (P₁, P₂) in a downstream direction (D),
a grouping arrangement (3) configured to receive the packages (P₁, P₂) from the transportation belt (2) and group a predetermined number of the packages (P₁, P₂) together,
**characterized by**
a guide member (4) arranged on one side of the transportation belt (2), and
a retainer (5) arranged on an opposite side of the transportation belt (2) relative to the guide member (4), the retainer (5) having a plurality of flexible elements (6) angled relative to the transportation belt (2), each flexible element (6) being configured to
- flex to enable passage of a package (P₁, P₂) in the downstream direction (D), and
- retract from a flexed position (F) after passage of the package (P₁, P₂), to prevent movement of the package (P₁, P₂) in an upstream direction.

2. The package handling arrangement (1) according to claim 1, wherein each flexible element (6) has a neutral position (N) in which the flexible element (6) is unflexed, the flexible element (6) being formed of a resilient material to retract to the neutral position (N) from the flexed position (F).

3. The package handling arrangement (1) according to claim 2, wherein each flexible element (6) is elongated in an extension direction (E₁) that is transverse to the downstream direction (D) when the flexible element (6) is in the neutral position (N).

4. The package handling arrangement (1) according to claim 3, wherein an angle (θ) between the extension direction (E₁) and the downstream direction (D) is between 15 and 30 degrees.

5. The package handling arrangement (1) according to any preceding claim, wherein each flexible element (6) has a base end (12), a tip end (13), and an elongated body (14) extending between the base end (12) and the tip end (13), wherein during flexing of the flexible element (6), the base (12) is configured to remain in a fixed position and the tip end (13) is configured to deflect relative to the base (12).

6. The package handling arrangement (1) according to claim 5, wherein the tip end (13) is configured to extend in an extension direction (E₂) that is parallel to the downstream direction (D) when the flexible element (6) is in the flexed position (F).

7. The package handling arrangement (1) according to any preceding claim, comprising a second guide member (7) arranged on the opposite side of the transportation belt (2), the retainer (5) being attached to the second guide member (7).

8. The package handling arrangement (1) according to claim 7, wherein the retainer (5) includes a metal bracket (8) mountable to the second guide member (7).

9. The package handling arrangement (1) according to claim 8, wherein the retainer (5) includes a plurality of fasteners (9) configured to secure each flexible element (6) to the metal bracket (8).

10. The package handling arrangement (1) according to claim 7, wherein each flexible element (6) is independently attachable to the second guide member (7) relative to the other flexible elements (6).

11. The package handling arrangement (1) according to any of claims 7-10, wherein the flexible elements (6) have a predetermined spacing (S) relative to each other along a portion of the second guide member (7).

12. The package handling arrangement (1) according to any preceding claim, wherein the flexible elements (6) are formed of a flexible plastic material.

13. The package handling arrangement (1) according to any preceding claim, wherein the grouping arrangement (3) includes a belt brake (3) having two rotating belts (10, 11) that are arranged to rotate in opposite rotational directions relative to each other, the belt brake (3) being configured to release the packages (P₁, P₂) after grouping the predetermined number of the packages (P₁, P₂) together.

14. A processing system (20) for producing packages (P₁, P₂) filled with a liquid food product, comprising:
a filling machine (21) configured to form packages and fill the packages (P₁, P₂) with the liquid food product, and
a package handling arrangement (1) configured to receive the packages (P₁, P₂) from the filling machine (21), the package handling arrangement (1) being a package handling arrangement (1) according to any preceding claim.

15. A method (30) for grouping packages (P₁, P₂) filled with a liquid food product, comprising:
transporting (31) the packages (P₁, P₂) in a downstream direction (D) on a transportation belt (2),
guiding (32) the packages (P₁, P₂) with a guide member (4) arranged on one side of the transportation belt (2), and
grouping (33) a predetermined number of the packages (P₁, P₂) together using a grouping arrangement (3) configured to receive the packages (P₁, P₂) from the transportation belt (2),
wherein the guiding (32) comprises passing the packages (P₁, P₂) past a retainer (5), the retainer (5) being arranged on an opposite side of the transportation belt (2) relative to the guide member (4), the retainer (5) having a plurality of flexible elements (6) angled relative to the transportation belt (2), each flexible element (6) being configured to
- flex to enable passage of a package (P₁, P₂) in the downstream direction (D), and
- retract from a flexed position (F) after passage of the package (P₁, P₂) to prevent movement of the package (P₁, P₂) in an upstream direction (U).

## Patentansprüche

1. Verpackungshandhabungsanordnung (1) zum Gruppieren von Verpackungen (P₁, P₂), die mit einem flüssigen Lebensmittelprodukt gefüllt sind, Folgendes umfassend:
ein Transportband (2), das dazu ausgelegt ist, die Verpackungen (P₁, P₂) in eine nachgelagerte Richtung (D) zu transportieren,
eine Gruppierungsanordnung (3), die dazu ausgelegt ist, die Verpackungen (P₁, P₂) vom Transportband (2) aufzunehmen und eine festgelegte Anzahl der Verpackungen (P₁, P₂) zu gruppieren, **gekennzeichnet durch** ein Führungsglied (4), das auf einer Seite des Transportbands (2) angeordnet ist, und
eine Halterung (5), die in Bezug zum Führungsglied (4) auf einer entgegengesetzten Seite des Transportbands (2) angeordnet ist, wobei die Halterung (5) mehrere flexible Elemente (6) aufweist, die in Bezug zum Transportband (2) angewinkelt sind, wobei jedes flexible Element (6) dazu ausgelegt ist,
- sich zu krümmen, um eine Verpackung (P₁, P₂) in die nachgelagerte Richtung (D) vorbeizulassen, und
- sich nach dem Vorbeilassen der Verpackung (P₁, P₂) aus der gekrümmten Stellung (F) zurückzubewegen, um die Bewegung der Verpackung (P₁, P₂) in eine vorgelagerte Richtung zu verhindern.

2. Verpackungshandhabungsanordnung (1) nach Anspruch 1, wobei jedes flexible Element (6) eine Neutralstellung (N) aufweist, in der das flexible Element (6) ungekrümmt ist, wobei das flexible Element (6) aus einem elastischen Material ausgebildet ist, um sich von der gekrümmten Stellung (F) in die Neutralstellung (N) zurückzubewegen.

3. Verpackungshandhabungsanordnung (1) nach Anspruch 2, wobei jedes flexible Element (6) in eine Ausdehnungsrichtung (E₁) verlängert ist, die quer zur nachgelagerten Richtung (D) ist, wenn sich das flexible Element (6) in der Neutralstellung (N) befindet.

4. Verpackungshandhabungsanordnung (1) nach Anspruch 3, wobei ein Winkel (θ) zwischen der Ausdehnungsrichtung (E₁) und der nachgelagerten Richtung (D) zwischen 15 und 30 Grad beträgt.

5. Verpackungshandhabungsanordnung (1) nach einem der vorstehenden Ansprüche, wobei jedes flexible Element (6) ein Basisende (12), ein Spitzenende (13) und einen länglichen Körper (14), der sich zwischen dem Basisende (12) und dem Spitzenende (13) erstreckt, aufweist, wobei während des Krümmens des flexiblen Elements (6) die Basis (12) dazu ausgelegt ist, in einer fixierten Stellung zu bleiben, und das Spitzenende (13) dazu ausgelegt ist, sich in Bezug zur Basis (12) abzulenken.

6. Verpackungshandhabungsanordnung (1) nach Anspruch 5, wobei das Spitzenende (13) dazu ausgelegt ist, sich in eine Ausdehnungsrichtung (E₂) zu erstrecken, die parallel zur nachgelagerten Richtung (D) ist, wenn sich das flexible Element (6) in der gekrümmten Stellung (F) befindet.

7. Verpackungshandhabungsanordnung (1) nach einem der vorstehenden Ansprüche, ein zweites Führungsglied (7) umfassend, das auf der entgegengesetzten Seite des Transportbands (2) angeordnet ist, wobei die Halterung (5) am zweiten Führungsglied (7) befestigt ist.

8. Verpackungshandhabungsanordnung (1) nach Anspruch 7, wobei die Halterung (5) einen Metallbügel (8) umfasst, der an dem zweiten Führungsglied (7) montierbar ist.

9. Verpackungshandhabungsanordnung (1) nach Anspruch 8, wobei die Halterung (5) mehrere Befestigungselemente (9) umfasst, die dazu ausgelegt sind, jedes flexible Element (6) am Metallbügel (8) zu fixieren.

10. Verpackungshandhabungsanordnung (1) nach Anspruch 7, wobei jedes flexible Element (6) in Bezug zu den anderen flexiblen Elementen (6) unabhängig an dem zweiten Führungsglied (7) befestigbar ist.

11. Verpackungshandhabungsanordnung (1) nach einem der Ansprüche 7-10, wobei die flexiblen Elemente (6) in Bezug zueinander entlang eines Abschnitts des zweiten Führungsglieds (7) einen festgelegten Abstand (S) aufweisen.

12. Verpackungshandhabungsanordnung (1) nach einem der vorstehenden Ansprüche, wobei die flexiblen Elemente (6) aus einem flexiblen Kunststoffmaterial ausgebildet sind.

13. Verpackungshandhabungsanordnung (1) nach einem der vorstehenden Ansprüche, wobei die Gruppierungsanordnung (3) eine Riemenbremse (3) mit zwei sich drehenden Riemen (10, 11) umfasst, die dazu angeordnet sind, sich in entgegengesetzte Drehrichtungen zueinander zu drehen, wobei die Riemenbremse (3) dazu ausgelegt ist, die Verpackungen (P₁, P₂) nach dem Gruppieren der festgelegten Anzahl von Verpackungen (P₁, P₂) freizugeben.

14. Verarbeitungssystem (20) zur Herstellung von Verpackungen (P₁, P₂), die mit einem flüssigen Lebensmittelprodukt gefüllt sind, Folgendes umfassend:
eine Füllmaschine (21), die dazu ausgelegt ist, Verpackungen (P₁, P₂) auszubilden und mit dem flüssigen Lebensmittelprodukt zu füllen, und
eine Verpackungshandhabungsanordnung (1), die dazu ausgelegt ist, die Verpackungen (P₁, P₂) von der Füllmaschine (21) aufzunehmen, wobei die Verpackungshandhabungsanordnung (1) eine Verpackungshandhabungsanordnung (1) nach einem der vorstehenden Ansprüche ist.

15. Verfahren (30) zum Gruppieren von Verpackungen (P₁, P₂), die mit einem flüssigen Lebensmittelprodukt gefüllt sind, Folgendes umfassend:
Transportieren (31) der Verpackungen (P₁, P₂) in eine nachgelagerte Richtung (D) auf einem Transportband (2), Führen (32) der Verpackungen (P₁, P₂) mit einem Führungsglied (4), das auf einer Seite des Transportbands (2) angeordnet ist, und
Gruppieren (33) einer festgelegten Anzahl von Verpackungen (P₁, P₂) mittels einer Gruppierungsanordnung (3), die dazu ausgelegt ist, die Verpackungen (P₁, P₂) vom Transportband (2) aufzunehmen,
wobei das Führen (32) das Vorbeilassen der Verpackungen (P₁, P₂) an einer Halterung (5) umfasst, wobei die Halterung (5) in Bezug zum Führungsglied (4) auf einer entgegengesetzten Seite des Transportbands (2) angeordnet ist, wobei die Halterung (5) mehrere flexible Elemente (6) aufweist, die in Bezug zum Transportband (2) angewinkelt sind, wobei jedes flexible Element (6) dazu ausgelegt ist,
- sich zu krümmen, um eine Verpackung (P₁, P₂) in die nachgelagerte Richtung (D) vorbeizulassen, und
- sich nach dem Vorbeilassen der Verpackung (P₁, P₂) aus der gekrümmten Stellung (F) zurückzubewegen, um die Bewegung der Verpackung (P₁, P₂) in eine vorgelagerte Richtung (U) zu verhindern.

## Revendications

1. Structure de manipulation d'emballages (1) pour le groupement d'emballages (P₁, P₂) remplis d'un produit alimentaire liquide, comprenant :
une bande transporteuse (2) conçue pour transporter les emballages (P₁, P₂) dans une direction aval (D),
une structure de groupement (3) conçue pour recevoir les emballages (P₁, P₂) de la bande transporteuse (2) et grouper un nombre prédéterminé des emballages (P₁, P₂),
**caractérisée par**
un élément de guidage (4) disposé sur un côté de la bande transporteuse (2), et
un dispositif de retenue (5) disposé sur un côté opposé de la bande transporteuse (2) par rapport à l'élément de guidage (4), le dispositif de retenue (5) comportant une pluralité d'éléments flexibles (6) inclinés par rapport à la bande transporteuse (2), chaque élément flexible (6) étant conçu pour
- fléchir afin de permettre le passage d'un emballage (P₁, P₂) dans la direction aval (D), et
- se rétracter depuis une position fléchie (F) après le passage de l'emballage (P₁, P₂) afin d'empêcher un déplacement de l'emballage (P₁, P₂) dans une direction amont.

2. Structure de manipulation d'emballages (1) selon la revendication 1, dans laquelle chaque élément flexible (6) a une position neutre (N) dans laquelle l'élément flexible (6) est non fléchi, l'élément flexible (6) étant fait d'un matériau élastique afin de se rétracter à la position neutre (N) depuis la position fléchie (F).

3. Structure de manipulation d'emballages (1) selon la revendication 2, dans laquelle chaque élément flexible (6) est allongé dans une direction d'étendue (E₁) qui est transversale à la direction aval (D) lorsque l'élément flexible (6) se trouve dans la position neutre (N).

4. Structure de manipulation d'emballages (1) selon la revendication 3, dans laquelle un angle (θ) entre la direction d'étendue (E₁) et la direction aval (D) est compris entre 15 et 30 degrés.

5. Structure de manipulation d'emballages (1) selon l'une quelconque des revendications précédentes, dans laquelle chaque élément flexible (6) comporte une extrémité de base (12), une extrémité de terminaison (13) et un corps allongé (14) s'étendant entre l'extrémité de base (12) et l'extrémité de terminaison (13), dans laquelle, lors du fléchissement de l'élément flexible (6), la base (12) est conçue pour rester dans une position fixe et l'extrémité de terminaison (13) est conçue pour dévier vis-à-vis de la base (12).

6. Structure de manipulation d'emballages (1) selon la revendication 5, dans laquelle l'extrémité de terminaison (13) est conçue pour s'étendre dans une direction d'étendue (E₂) qui est parallèle à la direction aval (D) lorsque l'élément flexible (6) se trouve dans la position fléchie (F).

7. Structure de manipulation d'emballages (1) selon l'une quelconque des revendications précédentes, comprenant un second élément de guidage (7) disposé sur le côté opposé de la bande transporteuse (2), le dispositif de retenue (5) étant attaché au second élément de guidage (7).

8. Structure de manipulation d'emballages (1) selon la revendication 7, dans laquelle le dispositif de retenue (5) est un support métallique (8) pouvant être installé sur le second élément de guidage (7).

9. Structure de manipulation d'emballages (1) selon la revendication 8, dans laquelle le dispositif de retenue (5) comprend une pluralité d'éléments de fixation (9) conçus pour assujettir chaque élément flexible (6) au support métallique (8).

10. Structure de manipulation d'emballages (1) selon la revendication 7, dans laquelle chaque élément flexible (6) peut être attaché de manière indépendante au second élément de guidage (7) relativement aux autres éléments flexibles (6).

11. Structure de manipulation d'emballages (1) selon l'une quelconque des revendications 7 à 10, dans laquelle les éléments flexibles (6) présentent un espacement (S) prédéterminé les uns par rapport aux autres le long d'une partie du second élément de guidage (7).

12. Structure de manipulation d'emballages (1) selon l'une quelconque des revendications précédentes, dans laquelle les éléments flexibles (6) sont faits d'une matière plastique flexible.

13. Structure de manipulation d'emballages (1) selon l'une quelconque des revendications précédentes, dans laquelle la structure de groupement (3) comprend un frein à courroies (3) comportant deux courroies rotatives (10, 11) qui sont disposées de façon à tourner dans des directions de rotation opposées l'une par rapport à l'autre, le frein à courroies (3) étant conçu pour libérer les emballages (P₁, P₂) après le groupement du nombre prédéterminé d'emballages (P₁, P₂) .

14. Système de traitement (20) pour la production d'emballages (P₁, P₂) remplis d'un produit alimentaire liquide, comprenant :
une machine de remplissage (21) conçue pour former des emballages et remplir les emballages (P₁, P₂) avec le produit alimentaire liquide, et
une structure de manipulation d'emballages (1) conçue pour recevoir les emballages (P₁, P₂) de la machine de remplissage (21), la structure de manipulation d'emballages (1) étant une structure de manipulation d'emballages (1) selon l'une quelconque des revendications précédentes.

15. Procédé (30) pour le groupement d'emballages (P₁, P₂) remplis d'un produit alimentaire liquide, comprenant :
transporter (31) les emballages (P₁, P₂) dans une direction aval (D) sur une bande transporteuse (2),
guider (32) les emballages (P₁, P₂) au moyen d'un élément de guidage (4) disposé sur un côté de la bande transporteuse (2), et
grouper (33) un nombre prédéterminé des emballages (P₁, P₂) à l'aide d'une structure de groupement (3) conçue pour recevoir les emballages (P₁, P₂) de la bande transporteuse (2),
dans lequel le guidage (32) comprend l'acheminement des emballages (P₁, P₂) le long d'un dispositif de retenue (5), le dispositif de retenue (5) étant disposé sur un côté opposé de la bande transporteuse (2) par rapport à l'élément de guidage (4), le dispositif de retenue (5) comportant une pluralité d'éléments flexibles (6) inclinés par rapport à la bande transporteuse (2), chaque élément flexible (6) étant conçu pour
- fléchir afin de permettre le passage d'un emballage (P₁, P₂) dans la direction aval (D), et
- se rétracter depuis une position fléchie (F) après le passage de l'emballage (P₁, P₂) afin d'empêcher un déplacement de l'emballage (P₁, P₂) dans une direction amont (U).
